(19) Europäisches Patentamt
European Patent Office
Office européen des brevets

(11) **EP 4 180 248 A1**

(12) **EUROPÄISCHE PATENTANMELDUNG**

(43) Veröffentlichungstag:
**17.05.2023 Patentblatt 2023/20**

(21) Anmeldenummer: **22201417.7**

(22) Anmeldetag: **13.10.2022**

(51) Internationale Patentklassifikation (IPC):
***B60G 17/06*** (2006.01)

(52) Gemeinsame Patentklassifikation (CPC):
**B60G 17/06;** B60G 2400/202; B60G 2400/252;
B60G 2500/10; B60G 2600/604

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **11.11.2021 DE 102021129355**

(71) Anmelder: **Audi AG**
**85045 Ingolstadt (DE)**

(72) Erfinder: **Unger, Andreas**
**85080 Gaimersheim (DE)**

(54) **VERFAHREN ZUM BETREIBEN EINES FAHRWERKS EINES KRAFTFAHRZEUGS SOWIE KRAFTFAHRZEUG**

(57) Die Erfindung betrifft ein Verfahren zum Betreiben eines Fahrwerks (16) eines Kraftfahrzeugs nach dem Prinzip einer Skyhook-Regelung, wobei das Fahrwerk (16) zumindest einen verstellbaren Dämpfer (16-2) umfasst, gemäß dem aus Fahrbahnunebenheiten resultierende Aufbaubewegungen des Kraftfahrzeugaufbaus (10) unter Verwendung des Skyhook-Dämpferwertes ($d_{sky}$) gedämpft werden. Die Erfindung zeichnet sich dadurch aus, dass beim Überfahren einer Fahrbahnunebenheit eine Einstufung vorgenommen wird, ob eine kritische Aufbaubewegung des Kraftfahrzeugaufbaus (10) zu erwarten ist, und dass bei einer Einstufung als eine kritische Aufbaubewegung, die als kritische eingestufte Aufbaubewegung unter Verwendung eines hinterlegten kritischen Skyhook-Dämpfwertes ($d_{sky-krit}$) ausgeglichen wird, der größer als der Skyhook-Dämpferwert ($d_{sky}$) ist.

Fig. 1

EP 4 180 248 A1

**Beschreibung**

Die Erfindung betrifft ein Verfahren zum Betreiben eines Fahrwerks eines Kraftfahrzeugs gemäß der im Oberbegriff des Patentanspruches 1 angegebenen Art sowie ein Kraftfahrzeug gemäß dem Patentanspruch 6.

Aktive Fahrwerksysteme, bei denen über krafteinleitende Elemente im Federung- bzw. Dämpfungssystem aktive Kräfte in der Radaufhängung erzeugt werden können, sind aus dem Stand der Technik hinreichend bekannt.

Eine Funktion dieser Fahrwerkssysteme besteht darin, größere Unebenheiten wie Speedbreaker oder Verwerfungen der Straße, auszugleichen. Dazu wird auf Signale einer vorausschauenden Sensorik, wie z.B. einer auf die Straße gerichteten Kamera, zurückgegriffen. Über eine geeignete Auswertungen der Sensorsignale bzw. der Kamerabilder, kann ein Höhenprofil der vor dem Kraftfahrzeug befindlichen Unebenheiten erstellt werden. Durch diese Vorausschau ist es nunmehr möglich, bereits vor dem Überfahren der Unebenheiten entsprechende Ansteuerungssignale an die Fahrwerksaktorik zu senden, um die Räder so über die Unebenheiten zu führen, sodass sich der Fahrzeugaufbau idealerweise dabei nicht mehr bewegt. Lediglich beispielhaft wird diesbezüglich auf die DE 10 2020 007 770 A1 verwiesen.

Ein bekanntes Problem dieser Art der Fahrwerksysteme ist, dass die Ermittlung des Straßenhöhenprofils über eine vorausschauende Sensorik, wie z.B. einer Kamera, sehr aufwendig ist. Dabei entstehen große Datenmengen, die zwischen verschiedenen Steuergeräten auf den Bussystemen des Kraftfahrzeugs geschickt werden müssen. Außerdem ist die Auswertung der Sensordaten, insbesondere die Auswertung der optischen Bilder der Kamera, fehlerbehaftet: so kann z.B. bei eingeschränkter Sicht auf die Straße, das Höhenprofil nicht mehr genau ermittelt werden, mit der Folge, dass aufgrund des Datenfehlers das aktive Fahrwerkssystem "falsch" reagiert, was wiederum dazu führen kann, dass eine Aufbaubewegung des Kraftfahrzeugaufbaus erzeugt statt reduziert wird.

Eine alternative Möglichkeit um größere Unebenheiten, wie Speedbreaker oder Verwerfungen der Straße, auszugleichen, basiert auf dem Prinzip der sogenannten Skyhook-Regelung. Dazu wird die Aufbaubewegung des Kraftfahrzeugaufbaus über eine Inertialsensorik (Drehraten, Beschleunigungen) gemessen und Ansteuersignale ermittelt, die der Aufbaubewegung entgegenwirken. Zum Stand der Technik hinsichtlich der Skyhook-Regelung wird beispielsweise auf die DE 101 20 918 A1 verwiesen.

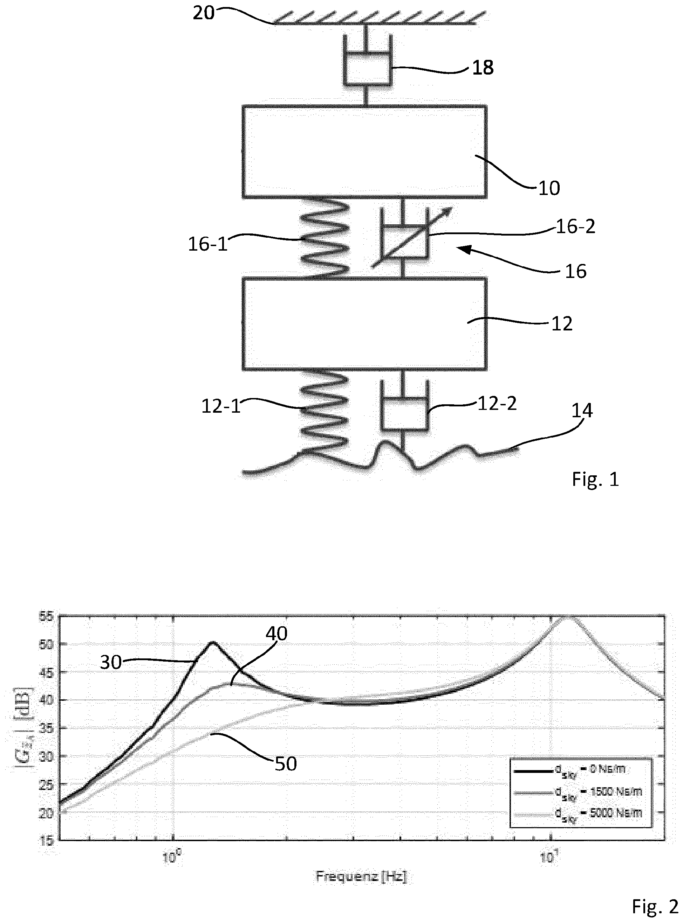

Der Skyhook-Ansatz basiert bekanntlich auf der theoretischen Überlegung, dass ein Kraftfahrzeugaufbau, der über ein Rad über eine Fahrbahn abrollt, in Ruhe bleiben kann, wenn der Kraftfahrzeugaufbau über einen sogenannten Skyhook-Dämpfer mit einem inertialen Referenzsystem, z.B. Himmel, verbunden ist, vgl. Fig. 1. Da die gedachte Anordnung des Skyhook-Dämpfers oberhalb des Fahrzeugaufbaus unmöglich zu realisieren ist, wird ein verstellbarer Dämpfer entsprechend so angesteuert, dass aus Fahrbahnunebenheiten resultierende Aufbaubewegungen des Kraftfahrzeugaufbaus gedämpft werden, d.h. der Effekt des "Skyhooks" wird nachgestellt.

Entscheidender Einflussparameter für die Dämpfung ist dabei der Dämpferwert des Skyhook-Dämpfers, nachfolgend als auch als Skyhook-Dämpferwert $d_{sky}$ bezeichnet, da dieser angibt, wie stark die Aufbaubewegung des Kraftfahrzeugaufbaus gedämpft werden soll.

D.h., dass - wenn ein entsprechend hoher Skyhook-Dämpferwert $d_{sky}$ für das Dämpfen von aus Fahrbahnunebenheiten resultierende Aufbaubewegungen des Kraftfahrzeugaufbaus vorgesehen ist - es prinzipiell möglich ist, ähnlich wie bei einer vorausschauenden Sensorik, die Aufbaubewegung des Kraftfahrzeugs beim Überfahren z.B. eines Speedbreakers, auf ein Minimum zu begrenzen. Dies erweist sich jedoch als nicht praxistauglich, da die hierfür notwendigen hohen Skyhook-Dämpferwerte $d_{sky}$ zu einer spürbaren Verschlechterung des Fahrkomforts führen, vgl. Fig. 2.

Der Erfindung liegt die Aufgabe zugrunde ein Verfahren zum Betreiben eines Fahrwerks eines Kraftfahrzeugs nach dem Prinzip einer Skyhook-Regelung derart weiterzubilden, dass neben einem hohen Fahrkomfort auch beim Überfahren von größeren Fahrbahnunebenheiten, wie z.B. Speedbreakern oder Verwerfungen der Straße, eine ausreichende Dämpfung der Aufbaubewegung des Kraftfahrzeugaufbaus sichergestellt ist.

Diese Aufgabe wird durch die kennzeichnenden Merkmale des Patentanspruches 1 in Verbindung mit seinen Oberbegriffsmerkmalen gelöst.

Die Unteransprüche 2 bis 5 stellen vorteilhafte Weiterbildungen des erfindungsgemäßen Verfahrens dar.

Gemäß dem Verfahren zum Betreiben eines Fahrwerks eines Kraftfahrzeugs, umfasst das Fahrwerk zumindest einen verstellbaren Dämpfer und die aus Fahrbahnunebenheiten resultierenden Aufbaubewegung des Kraftfahrzeugaufbaus werden in bekannter Art und Weise unter Verwendung des Skyhook-Dämpferwertes $d_{sky}$ gedämpft.

Erfindungsgemäß ist nunmehr vorgesehen, dass beim Überfahren einer Fahrbahnunebenheit eine Einstufung vorgenommen wird, ob durch das Überfahren der Fahrbahnunebenheiten eine kritische Aufbaubewegung des Kraftfahrzeugaufbaus zu erwarten ist, und dass bei einer Einstufung als eine kritische Aufbaubewegung, die als kritisch eingestufte Aufbaubewegung unter Verwendung eines hinterlegten, in Bezug zum "normalen" Dämpferwert $d_{sky}$ erhöhten Skyhook-Dämpfwertes, nachfolgend als kritischer Skyhook-Dämpferwert $d_{sky-krit}$ bezeichnet, ausgeglichen wird.

Mit anderen Worten, der Skyhook-Dämpferwert $d_{sky}$ wird selektiv, nämlich nur für die Überfahrt einer relevanten Unebenheiten temporär auf den kritischen Skyhook-Dämpferwert $d_{sky-krit}$ angehoben, sodass lediglich eine vorübergehende, temporäre Verschlechterung des Fahrkomforts auftritt. Aufgrund der deutlich verbesserten Dämpfung beim Überfahren der Unebenheiten und des damit verbundenen deutlich verbesserten Fahrgefühls, wird diese, lediglich vorübergehende, aus der temporären Anhebung auf den kritischen Skyhook-Dämpferwert $d_{sky\text{-}krit}$ resultierende Verschlechterung des Fahrkomforts, nahezu nicht wahrgenommen bzw. als nicht störend empfunden.

Lediglich der Vollständigkeit halber wird darauf hingewiesen, dass der für die Dämpfung von als kritisch eingestuften Aufbaubewegungen verwendete kritische Skyhook-Dämpfwert $d_{sky\text{-}krit}$ wesentlich größer als der für die Dämpfung von nicht als kritisch eingestuften, d.h. "normalen" Aufbaubewegungen verwendete "normale" Skyhook-Dämpferwert $d_{sky}$ ist. Wesentlich größer ist dabei insbesondere so zu verstehen, dass der kritische Skyhook-Dämpferwert $d_{sky\text{-}krit}$ zumindest um den Faktor 2 größer als der "normale" Skyhook-Dämpferwert $d_{sky}$ ist.

In vorteilhafter Weise ermöglicht somit das erfindungsgemäße Verfahren bei der Überfahrt von größeren Unebenheiten wie z.B. Speedbreakern, ein vergleichbare Reduzierung der Aufbaubewegung, wie eine vorausschauende Sensorik.

Vorteilhaft ist zudem, dass die verfahrensgemäß verwendete Skyhook-Regelung sehr robust und im Vergleich zum Konzept der vorausschauenden Sensorik deutlich weniger komplex ist, da die aufwändige Datenverarbeitung der Sensorsignale, insbesondere der Kamerasignale, nicht mehr notwendig ist. Außerdem kann es nunmehr nicht mehr zu fehlerhaften Ansteuerung des Fahrwerks aufgrund von falsch erkannten Straßenhöhenprofilen kommen.

D.h., obwohl keine vorausschauende Sensorik genutzt wird, erfährt der Fahrer eine vergleichbare Erlebbarkeit bei der Überfahrt von größeren Straßenunebenheiten, wie Speedbreakern oder Verwerfungen in der Straße.

Vorzugsweise ist dabei der hinterlegte kritische Skyhook-Dämpfwert $d_{sky\text{-}krit}$ so gewählt, dass der Skyhook-Dämpfwert $d_{sky\text{-}krit} \geq 4000$ Ns/m. Durch die Festlegung des Skyhook-Dämpfwertes $d_{sky\text{-}krit}$ auf $\geq 4000$ Ns/m ist ein ausreichend große Dämpfung gewährleistet, um eine als kritisch eingestufte Aufbaubewegung des Kraftfahrzeugaufbaus wirksam zu dämpfen.

Besonders bevorzugt ist dabei der Skyhook-Dämpfwert $d_{sky\text{-}krit} = 5000$ Ns/m bzw. $\geq 5000$ Ns/m. Wie erste Versuche gezeigt haben, ist ab einem Skyhook-Dämpfwert $d_{sky\text{-}krit} = 5000$ auch beim Überfahren von größeren Unebenheiten, eine wirksame Dämpfung des Fahrzeugaufbaus gewährleistet.

Die erforderliche Einstufung, nämlich ob durch das Überfahren der Fahrbahnunebenheiten eine kritische Aufbaubewegung des Kraftfahrzeugaufbaus zu erwarten ist, wird erfindungsgemäß durchgeführt, indem in einem ersten Schritt auftretende Federwege gemessen und aus den gemessenen Federwegen mittels Differenzieren die resultierenden Federgeschwindigkeiten ermittelt werden.

Die Bestimmung der Federgeschwindigkeit durch Ableitung der Federwegdaten erweist sich als vorteilhaft, da Federwegsensoren in heutigen Kraftfahrzeugen in der Regel standartmäßig verbaut sind, sodass hierdurch eine einfache und kostengünstige Ermittlung der notwendigen Federgeschwindigkeiten ermöglicht ist.

Da die gemessenen Federwege und damit auch die daraus ermittelten Federgeschwindigkeiten aus überlagerten Schwingungen bestehen, die im Wesentlichen Anteile der Aufbaubewegung und der Radbewegung enthalten, und nur eine Anregung im Bereich der Aufbaufrequenz zu einer großen somit kritischen Aufbaubewegung des Kraftfahrzeugaufbaus führen kann, werden in einem nächsten Schritt über einen Tiefpassfilter die Signalanteile der Aufbaufrequenz aus den Federgeschwindigkeiten extrahiert.

Da die Richtung der Anregung nicht wichtig ist, werden in einem nächsten Schritt von den gefilterten Federgeschwindigkeiten die Beträge ermittelt.

Anschließend werden die Beträge der gefilterten Federgeschwindigkeiten mit einer hinterlegten unteren Grenzgeschwindigkeit verglichen.

Bei der hinterlegten unteren Grenzgeschwindigkeit handelt es sich dabei um eine rechnerisch oder mittels Versuchen ermittelte Geschwindigkeit, bei deren Überschreitung davon auszugehen ist, dass der Fahrzeugaufbau eine Anregung erfährt, die zu einer kritischen Aufbaubewegung führt.

Ergibt nun der Vergleich, dass der Betrag einer gefilterten Federgeschwindigkeit die hinterlegte untere Grenzgeschwindigkeit überschreitet, wird die zu erwartende Aufbaubewegung als eine kritische Aufbaubewegung des Kraftfahrzeugaufbaus eingestuft und es wird ein entsprechendes Ansteuersignal zum Stellen einer über den verstellbaren Dämpfer zu stellenden Dämpferkraft zum Reduzieren der als kritisch eingestuften Aufbaubewegung generiert.

Da die Skyhook-Dämpfung mit Überschreiten der hinterlegten unteren Grenzgeschwindigkeit erhöht wird, wird die Aufbaubewegung bereits gedämpft, bevor diese vollständig ausgeprägt ist.

Um einen "weichen" Übergang zwischen der normalen Skyhook-Dämpfung und der erhöhten Skyhook-Dämpfung zu gewährleisten, wird gemäß einer besonders bevorzugten Ausführungsform der Betrag der gefilterten Federgeschwindigkeiten zudem noch mit einer hinterlegten oberen Grenzgeschwindigkeit vergleichen, und das Ansteuersignal wird

- auf den Wert 1 gesetzt, wenn der Betrag der gefilterten Federgeschwindigkeit $\geq$ die hinterlegte obere Grenzgeschwindigkeit ist,
- auf den Wert 0 gesetzt, wenn der Betrag der gefilterten Federgeschwindigkeit $\leq$ die hinterlegte untere Grenzgeschwindigkeit ist, und
- interpoliert, wenn die hinterlege untere Grenzgeschwindigkeit < der Betrag der gefilterten Federgeschwindigkeit <

die hinterlegte obere Grenzgeschwindigkeit ist.

Um die gesamte Schwingungsperiode des Kraftfahrzeugaufbaus zu dämpfen, sieht eine weitere bevorzugte Ausführungsform vor, dass das Ansteuersignal zum Stellen der erhöhten Skyhook-Dämpfung und damit zum Reduzieren der kritischen Aufbaubewegung für eine hinterlegte Zeitspanne aufrecht erhalten wird. Dies ist verfahrensgemäß über ein entsprechendes Halteglied auf eine einfache Art und Weise zu realisieren.

Der Erfindung liegt des Weiteren die Aufgabe zugrunde, ein Kraftfahrzeug, welches ein Fahrwerk, gemäß dem die Räder des Kraftfahrzeugs jeweils über eine einen verstellbaren Dämpfer aufweisende Radaufhängung am Kraftfahrzeugaufbau gelagert sind, sowie eine die verstellbaren Dämpfer regelnde Regel-/Steuereinheit umfasst, derart weiterzubilden, dass bei einem hohen Fahrkomfort auch beim Überfahren von größeren Fahrbahnunebenheiten, wie z.B. Speedbreakern oder Verwerfungen der Straße, eine ausreichende Dämpfung der Aufbaubewegung des Kraftfahrzeugaufbaus sichergestellt ist.

Diese Aufgabe wird dadurch gelöst, dass die verstellbaren Dämpfer des Fahrwerks des Kraftfahrzeugs nach einem der Patentansprüche 1 bis 5 betrieben werden und die Regel-/Steuereinheit eingerichtet ist, ein Verfahren nach einem der Ansprüche 1 bis 5 auszuführen.

Sämtliche Ausführungen zu dem erfindungsgemäßen Verfahren zum Betreiben eines Fahrwerks eines Kraftfahrzeugs lassen sich analog auf das erfindungsgemäße Kraftfahrzeug übertragen, sodass mit diesem auch die zuvor genannten Vorteile erzielt werden.

Weitere Vorteile und Anwendungsmöglichkeiten der Erfindung ergeben sich aus der nachfolgenden Beschreibung in Verbindung mit der Zeichnung.

In der Zeichnung zeigen:

Fig. 1    eine schematische Darstellung des Skyhook-Prinzips;

Fig. 2    eine graphische Darstellung des Einflusses des Skyhook-Dämpfwertes auf die Aufbaubeschleunigung;

Fig. 3    ein schematisches Ablaufdiagramm des Verfahrens;

Fig. 4a    die ermittelten Federgeschwindigkeiten aufgetragen über die Zeit;

Fig. 4b    die gefilterten, betragsmäßig betrachteten Federgeschwindigkeiten aus Fig. 4a aufgetragen über die Zeit, und

Fig. 4c    das resultierende Ansteuersignal.

Fig. 1 zeigt in einer schematischen Darstellung einen Kraftfahrzeugaufbau 10, der über ein Rad 12 über eine Fahrbahn 14 abrollt. Zwischen Kraftfahrzeugaufbau 10 und Rad 12 ist in bekannter Art und Weise ein Fahrwerk 16 angeordnet, das neben einer Tragfeder 16-1 einen verstellbaren Dämpfer 16-2 umfasst.

Die Feder-/Dämpfereigenschaften des Rades 12 beim Abrollen auf der Fahrbahn 14 sind durch die mit dem Bezugszeichen 12-1 bezeichnete Reifenfeder und dem mit dem Bezugszeichen 12-2 bezeichneten Reifendämpfer berücksichtigt.

Das Skyhook-Prinzip bzw. der Skyhook-Ansatz basiert bekanntlich auf der theoretischen Überlegung, dass der Kraftfahrzeugaufbau 10, der über das Rad 12 über die Fahrbahn 14 abrollt, in Ruhe bleiben kann, wenn der Kraftfahrzeugaufbau 10 über einen sogenannten Skyhook-Dämpfer 18 mit einem inertialen Referenzsystem 20, z.B. Himmel, verbunden ist. Da die gedachte Anordnung des Skyhook-Dämpfers 18 oberhalb des Fahrzeugaufbaus 10 unmöglich zu realisieren ist, wird der verstellbarer Dämpfer 16-2 entsprechend so angesteuert, dass aus Fahrbahnunebenheiten resultierende Aufbaubewegungen des Kraftfahrzeugaufbaus 10 gedämpft werden, d.h. der Effekt des "Skyhook" wird nachgestellt.

Entscheidender Einflussparameter ist dabei der sogenannte Skyhook-Dämpferwert $d_{sky}$, da dieser angibt, wie stark die Aufbaubewegung des Kraftfahrzeugaufbaus 10 gedämpft werden soll.

Der Einfluss des Skyhook-Dämpferwertes $d_{sky}$ auf die aus einem Überfahren von Fahrbahnunebenheiten resultierenden Beschleunigungen des Kraftfahrzeugaufbaus 10 ist Fig. 2 zu entnehmen, in der die Amplitude der Aufbaubeschleunigung über die Frequenz dargestellt ist. Deutlich erkennbar ist die Eigenfrequenz des Kraftfahrzeugaufbaus 10 bei ca. 1,3 Hz und die Eigenfrequenz des Rades 12 bei ca. 11Hz.

Mit dem Bezugszeichen 30 ist dabei der ungeregelte Verlauf, d.h. Skyhook-Dämpferwert $d_{sky}$ =0 Ns/m, mit Bezugszeichen 40 der Verlauf mit einem Skyhook-Dämpferwert $d_{sky}$ = 1500 Ns/m und mit Bezugszeichen 50 der Verlauf mit einem Skyhook-Dämpfwert $d_{sky}$ = 5000 Ns/m bezeichnet.

Dabei zeigt, wie Fig. 2 zu entnehmen ist, der ungeregelte Verlauf 30 deutliche Schwingungsamplituden im Bereich der Eigenfrequenz des Kraftfahrzeugaufbaus 10. Diese können stark reduziert werden, wenn der Skyhook-Dämpferwert $d_{sky}$ erhöht wird, vgl. Verlauf 40 mit $d_{sky}$ = 1500 Ns/m und Verlauf 50 mit $d_{sky}$ = 5000 Ns/m. Es ist weiterhin zu erkennen, dass bei einer hohen Skyhook-Dämpfung, vgl. Verlauf 50 mit $d_{sky}$ = 5000 Ns/m, auch eine Erhöhung der Amplituden im Isolationsbereich, ca. 3 Hz bis 8 Hz, zur Folge hat, was wiederum eine Verschlechterung des Fahrkomforts bedeutet.

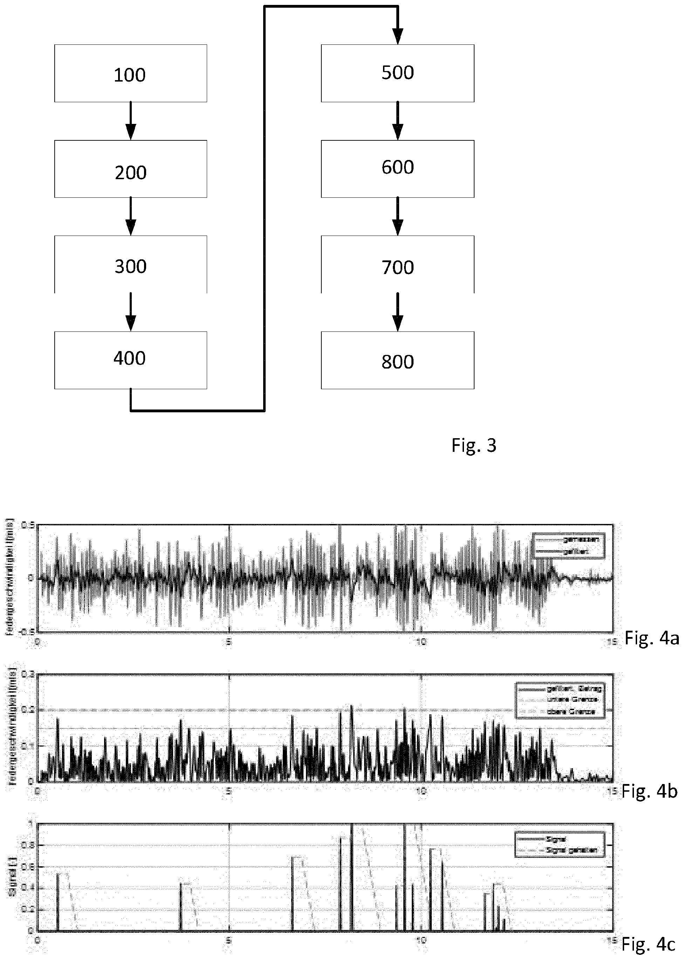

Wie Fig. 3 zu entnehmen ist, ist erfindungsgemäß vorgesehen, dass in einem ersten Schritt 100 über im Kraftfahrzeug verbauten Federwegsensoren, die auftretenden Federwege gemessen werden. Aus den gemessenen Federwegen wird in Schritt 200 durch Ableiten die Federgeschwindigkeiten bestimmt.

Die bestimmten Federgeschwindigkeiten umfassen dabei insbesondere aus der Bewegung des Kraftfahrzeugaufbaus 10 und der Bewegung des Rades 12 resultierende Signalanteile, vgl. Fig. 4a, in schmaler Linie dargestellte Signale.

Da nur eine Anregung im Bereich der Eigenfrequenz des Kraftfahrzeugaufbaus 10 zu einer großen und damit relevanten Aufbaubewegung führen kann, werden im Schritt 300 über einen Tiefpassfilter die Signalanteile der Aufbaufrequenz aus den Federgeschwindigkeiten extrahiert, vgl. Fig. 4a, in fetter Linie dargestellte Signale.

Da die Richtung der Anregung nicht wichtig ist, wird in Schritt 400 eine betragsmäßige Betrachtung der gefilterten Federgeschwindigkeiten durchgeführt, vgl. Fig. 4b.

Da im Kraftfahrzeug in der Regel mehrere Federwegsensoren verbaut sind, wird in Schritt 500 der Maximalwert ausgewählt. Überschreitet dieser eine festgelegte untere Grenzgeschwindigkeit, vgl. Fig. 4b strichpunktierte Linie, wird die Einstufung als kritisch eingestuft, die entsprechend mit dem kritischen Skyhook-Dämpferwert $d_{sky-krit}$ zu dämpfen ist.

Für einen weichen Übergang zwischen der "normalen" Skyhook-Dämpfung mit dem "normalen" Skyhook-Dämpferwert $d_{sky}$ und der diesbezüglich erhöhten Skyhook-Dämpfung mit dem kritischen Skyhook-Dämpferwert $d_{sky-krit}$, wird in Schritt 600 zwischen der unteren Grenzgeschwindigkeit und einer festgelegten oberen Grenzgeschwindigkeit, vgl. Fig. 4b, gestrichelte Linie, interpoliert, d.h. das Signal zum Erhöhen der Skyhook-Dämpfung ist 0, falls die ungefilterte, in Betrag genommene Federgeschwindigkeit gleich oder unterhalb der unteren Grenzgeschwindigkeit ist und 1, falls die gefilterte in Betrag genommene Federgeschwindigkeit gleich oder oberhalb der oberen Grenzgeschwindigkeit ist, vgl. Fig. 4c.

Da bei Überschreitung der unteren Grenzgeschwindigkeit davon auszugehen ist, dass der Kraftfahrzeugaufbau 10 einer Anregung erfährt, die zu einer signifikanten Aufbauschwingung führt und die Skyhook-Dämpfung bereits mit Überschreiten der unteren Grenzgeschwindigkeit erhöht wird, vgl. Schritt 800, wird die Aufbaubewegung schon gedämpft, bevor sie vollständig ausgeprägt ist.

Um die gesamte Schwingungsperiode des Kraftfahrzeugaufbaus 10 zu dämpfen wird die erhöhte Skyhook-Dämpfung für eine einzustellende Zeit aufrechterhalten, vgl. Fig. 4c, gestrichelte Linie. Dies wird in Schritt 700 mittels eines entsprechenden Halteglieds reallisiert.

**Patentansprüche**

1. Verfahren zum Betreiben eines Fahrwerks (16) eines Kraftfahrzeugs nach dem Prinzip einer Skyhook-Regelung, wobei das Fahrwerk (16) zumindest einen verstellbaren Dämpfer (16-2) umfasst, gemäß dem aus Fahrbahnunebenheiten resultierende Aufbaubewegungen des Kraftfahrzeugaufbaus (10) unter Verwendung des Skyhook-Dämpferwertes ($d_{sky}$) gedämpft werden,
   **dadurch gekennzeichnet, dass**
   beim Überfahren einer Fahrbahnunebenheit eine Einstufung vorgenommen wird, ob eine kritische Aufbaubewegung des Kraftfahrzeugaufbaus (10) zu erwarten ist, und dass bei einer Einstufung als eine kritische Aufbaubewegung, die als kritisch eingestufte Aufbaubewegung unter Verwendung eines hinterlegten kritischen Skyhook-Dämpfwertes ($d_{sky-krit}$) ausgeglichen wird, der größer als der Skyhook-Dämpferwert ($d_{sky}$) ist.

2. Verfahren nach Anspruch 1,
   **dadurch gekennzeichnet, dass**
   für den hinterlegten kritischen Skyhook-Dämpferwert ($d_{sky-krit}$) gilt:

$$\text{kritischer Skyhook-Dämpferwert } (d_{sky\text{-}krit}) \geq 4000 \text{ Ns/m}$$

3. Verfahren nach Anspruch 1 oder 2,
   **dadurch gekennzeichnet, dass**

   die Einstufung durchgeführt wird, indem
   auftretende Federwege gemessen und aus den gemessenen Federwege die resultierenden Federgeschwindigkeiten ermittelt und die ermittelten Federgeschwindigkeiten in einem Tiefpassfilter gefiltert werden, wobei von den gefilterten Federgeschwindigkeiten jeweils der Betrag ermittelt und der Betrag der gefilterten Federgeschwindigkeiten mit einer hinterlegten unteren Grenzgeschwindigkeit verglichen wird, und dass - wenn der Betrag einer gefilterten Federgeschwindigkeit größer als die hinterlegte untere Grenzgeschwindigkeit ist - die zu erwartende Aufbaubewegung als eine kritische Aufbaubewegung des Kraftfahrzeugaufbaus (10) eingestuft, und ein Ansteuersignal zum Reduzieren der kritischen Aufbaubewegung generiert wird.

4. Verfahren nach Anspruch 3,
   **dadurch gekennzeichnet, dass**
   der Betrag der gefilterten Federgeschwindigkeiten auch mit einer hinterlegen oberen Grenzgeschwindigkeit verglichen wird, wobei - wenn der Betrag der gefilterten Federgeschwindigkeit $\geq$ die hinterlegte obere Grenzgeschwindigkeit ist - das Ansteuersignal auf den Wert 1 gesetzt, - wenn der Betrag der gefilterten Federgeschwindigkeit $\leq$ die hinterlegte untere Grenzgeschwindigkeit ist - das Ansteuersignal auf den Wert 0 gesetzt wird, und - wenn die hinterlege untere Grenzgeschwindigkeit < der Betrag der gefilterten Federgeschwindigkeit < die hinterlegte obere Grenzgeschwindigkeit ist - der Wert des Ansteuersignals durch eine Interpolation ermittelt wird.

5. Verfahren nach Anspruch 4,
   **dadurch gekennzeichnet, dass**
   das Ansteuersignal zum Reduzieren der kritischen Aufbaubewegung für eine hinterlegte Zeitspanne aufrecht erhalten wird.

6. Kraftfahrzeug, umfassend ein Fahrwerk (16) gemäß dem die Räder (12) des Kraftfahrzeugs jeweils über eine einen verstellbaren Dämpfer (16-2) aufweisende Radaufhängung am Kraftfahrzeugaufbau (10) gelagert sind, sowie eine die verstellbaren Dämpfer (16-2) regelnde/steuernde Regel-/Steuereinheit,
   **dadurch gekennzeichnet, dass**
   die verstellbaren Dämpfer (16-2) nach einem der Ansprüche 1 bis 5 betrieben werden.

7. Kraftfahrzeug nach Anspruch 6,
   **dadurch gekennzeichnet, dass**
   die Regel-/Steuereinheit eingerichtet ist, ein Verfahren nach einem der Ansprüche 1 bis 5 auszuführen.

Fig. 1

Fig. 2

Fig. 3

Fig. 4a

Fig. 4b

Fig. 4c

Europäisches Patentamt
European Patent Office
Office européen des brevets

# EUROPÄISCHER RECHERCHENBERICHT

**Nummer der Anmeldung**

**EP 22 20 1417**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 276 622 A (MILLER LANE R [US] ET AL) 4. Januar 1994 (1994-01-04)<br>* Zusammenfassung *<br>* Abbildungen 1, 2, 3 *<br>* Spalte 1, Zeilen 4-10 *<br>* Spalte 5, Zeilen 8-11 *<br>* Spalte 7, Zeile 64 – Spalte 8, Zeile 22 *<br>* Spalte 11, Zeile 64 – Spalte 12, Zeile 6 *<br>* Spalte 13, Zeilen 36-54 *<br>----- | 1-7 | INV.<br>B60G17/06 |
| A | US 5 382 045 A (TAKEDA MASAYOSHI [JP] ET AL) 17. Januar 1995 (1995-01-17)<br>* Abbildungen 6, 13, 16 *<br>----- | 1-7 | |
| A | US 5 522 482 A (KASHIWAGI AKIRA [JP] ET AL) 4. Juni 1996 (1996-06-04)<br>* Abbildungen 2A, 2B *<br>----- | 1-7 | |
| A | US 2019/232748 A1 (MOHAMED AHMED [US] ET AL) 1. August 2019 (2019-08-01)<br>* Absatz [0064] *<br>----- | 1-7 | **RECHERCHIERTE SACHGEBIETE (IPC)**<br><br>B60G |

Der vorliegende Recherchenbericht wurde für alle Patentansprüche erstellt

| Recherchenort | Abschlußdatum der Recherche | Prüfer |
|---|---|---|
| Den Haag | 30. Januar 2023 | Schmidt, Nico |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 20 1417

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-01-2023

| Im Recherchenbericht angeführtes Patentdokument | Datum der Veröffentlichung | Mitglied(er) der Patentfamilie | Datum der Veröffentlichung |
|---|---|---|---|
| US 5276622 A | 04-01-1994 | CA 2081219 A1 | 26-04-1993 |
| | | EP 0539063 A1 | 28-04-1993 |
| | | JP H05221223 A | 31-08-1993 |
| | | US 5276622 A | 04-01-1994 |
| US 5382045 A | 17-01-1995 | JP H0699718 A | 12-04-1994 |
| | | US 5382045 A | 17-01-1995 |
| US 5522482 A | 04-06-1996 | DE 4408292 A1 | 15-09-1994 |
| | | JP 3379024 B2 | 17-02-2003 |
| | | JP H06316212 A | 15-11-1994 |
| | | US 5522482 A | 04-06-1996 |
| US 2019232748 A1 | 01-08-2019 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020007770 A1
- DE 10120918 A1